# DEMANDE DE BREVET EUROPEEN

(11) **EP 0 652 251 A1**
(43) Date de publication de la demande: **10.05.1995**
(21) Numéro de dépôt: 94402494.2
(22) Date de dépôt: 04.11.1994
(51) Int. Cl.: C08J 11/28

(54) **Procédé de recyclage de déchets de matériaux élastomères à base de polyéthylène, ou de copolymères d'éthylène réticulés par silane**

(30) Priorité: 08.11.1993 FR 9313264
(71) Demandeur: CABLERIES DE LENS, F-62300 Lens (FR)
(72) Inventeur: Prigent, Madeleine, F-91460 Marcoussis (FR); Assier, Jean-Claude, F-91860 Epinay S/S Senart (FR); Chaillie, Alain, F-91680 Bruyeres le Chatel (FR); Delaunois, Guy, B-7370 Dour (BE)
(74) Mandataire: Buffiere, Michelle

(57) **Abrégé**

Procédé de recyclage de déchets de matériaux élastomères à base de polyéthylène, ou de copolymères d'éthylène et d'un autre monomère oléfinique, réticulés par silane, en vue de la fabrication de matériaux élastomères régénérés, notamment pour gaînage de câbles électriques.
On ajoute aux déchets avant leur malaxage à chaud pour réutilisation de la dicyclohexylcarbodiimide ou une polydicyclohexylcarbodiimide, en proportion pondérale de 0,5 % à 5 %, rapportés au poids du matériau élastomère.

## Description

La présente invention concerne un procédé de recyclage de déchets de matériaux élastomères à base de polyéthylène, ou de copolymères d'éthylène et d'un autre monomère oléfinique, réticulés par silane, en vue de la fabrication de matériaux élastomères régénérés, notamment pour gaînage de câbles électriques.

On sait que pour obtenir des matériaux élastomères présentant des propriétés mécaniques suffisantes à base de polyéthylène ou de copolymères d'éthylène et d'un autre monomère oléfinique, tel que l'acétate de vinyle, on doit soumettre le polymère à une réticulation, soit par peroxyde organique, soit par irradiation, soit par un alcoxysilane. Dans ce dernier cas, les groupements alcoxysilanes greffés sur le polymère subissent en présence de l'humidité de l'air ou après immersion dans l'eau une hydrolyse et se condensent en formant avec les chaînes du polymère un réseau tridimensionnel. Ce type de réticulation est de plus en plus adopté pour les gaînes de câbles à basse tension. Mais ce procédé engendre inévitablement la formation de déchets, notamment lors du réglage ou de la purge des machines, ainsi que de la mise au point de la proportion de silane à introduire dans le polymère. La quantité de silane greffé sur ces polymères varie par ailleurs selOn le type de déchets, et le taux de réticulation de ces derniers est fonction des conditions et de la durée de leur stockage.

Les déchets partiellement hydrolysés présentent une viscosité notablement supérieure à celle du matériau initial et variable, ce qui rend leur réutilisation pour une fabrication déterminée très difficile et entraîne généralement leur mise au rebut.

L'invention a pour but de permettre le recyclage de tels déchets sous forme de matériaux de viscosité suffisamment faible pour permettre leur emploi dans la fabrication d'éléments tels que des gaînes de câble.

Le procédé selon l'invention est caractérisé en ce que l'on ajoute aux déchets avant leur malaxage à chaud pour réutilisation de la dicyclohexylcarbodiimide ou une polydicyclohexylcarbodiimide, en proportion pondérale de 0,5 % à 5 %, rapportés au poids de matériau à recycler.

On a en effet constaté qu'après une telle addition la viscosité du matériau, mesurée par exemple par le couple nécessaire à l'entraînement du malaxeur, est très voisine de celle de l'élastomère initial à partir duquel les déchets avaient été obtenus.

Le tableau I ci-après donne à titre comparatif pour des déchets de copolymère d'éthylène et d'acétate de vinyle greffé par silane, stockés pendant 3 mois, non traités, et pour les mêmes déchets additionnés de 1 % en poids de dicyclohexylcarbodiimide, d'une part l'augmentation du couple d'un malaxeur "Rheocord" de Haake, d'autre part la fraction insoluble dans le toluène (un polymère non réticulé étant soluble dans le toluène, et un polymère réticulé y étant insoluble à 85 % ou plus).

Le malaxeur "Rheocord" de Haake est constitué d'une chambre de 63 cm3 et de deux rotors. L'élastomère y est malaxé à une température programmée donnée et avec vitesse de rotation des pales donnée. Il assure la mesure en continu de la température du mélange et du couple réactif qui correspond à l'écoulement de celui-ci dans le malaxeur.

**Tableau I**

| Mélange traité | Fraction insoluble dans le toluène (% en poids) | Augmentation du couple |
|---|---|---|
| Copolymère d'éthylène et d'acétate de vinyle greffé par silane stocké 3 mois | 44 | + 25% |
| Même copolymère additionné de 1% de dicyclohexylcarbodiimide | 0 | 0 (couple) (inchangé) |

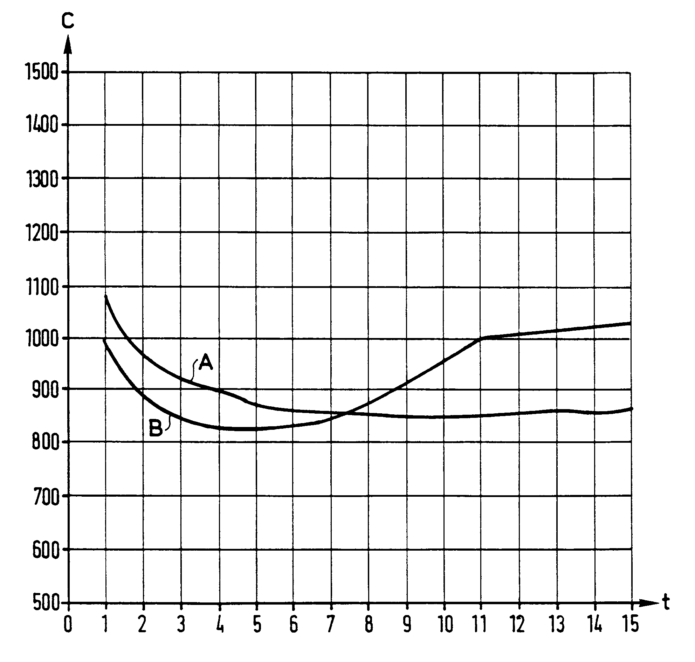

La figure 1 du dessin annexé représente la variation en fonction du temps t en minutes du couple réactif C (en gm) d'une part, pour un copolymère d'éthylène et d'acétate de vinyle greffé par silane et stocké depuis 1 an (courbe A) d'autre part, pour ce même copolymère greffé et stocké pendant le même temps et auquel on a ajouté avant le malaxage à 220°C 1% en poids de dicyclohexylcarbodiimide (courbe B).

Il apparaît qu'au bout de 6 minutes, le couple correspondant au produit sans additif augmente progressivement (début de réticulation) alors que le couple réactif du mélange contenant l'additif selon l'invention reste stable.

Ce second matériau ayant une viscosité constante et ne réticulant pas pendant le malaxage pourra donc être réutilisé seul ou ajouté à un second polymère; le matériau obtenu est homogène, ce qui n'est pas le cas avec le matériau ne contenant pas de dicyclohexylcarbodiimide.

La dicyclohexylcarbodiimide étant un liquide irritant, on peut lui substituer des polydicylclohexylcarbodiimides, de masse molaire plus élevée et ne présentant pas cet inconvénient, mais aussi efficaces pour la réduction de la viscosité.

## Revendications

1. Procédé de recyclage de déchets de matériaux élastomères à base de polyéthylène, ou de copolymères d'éthylène et d'un autre monomère oléfinique, réticulés par silane, en vue de la fabrication de matériaux élastomères régénérés, notamment pour gaînage de câbles électriques, caractérisé en ce que l'on ajoute aux déchets avant leur malaxage à chaud pour réutilisation de la dicyclohexylcarbodiimide ou une polydicyclohexylcarbodiimide, en proportion pondérale de 0,5 % à 5 %, rapportés au poids du matériau élastomère.
